# EUROPEAN PATENT SPECIFICATION

(11) **EP 4 164 088 B1**
(45) Date of publication and mention of the grant of the patent: **01.10.2025**
(21) Application number: 21201926.9
(22) Date of filing: 11.10.2021
(51) Int. Cl.: H02J 7/02

(54) **ONBOARD MEDIUM-VOLTAGE VESSEL ELECTRIC CHARGING APPARATUS AND METHOD FOR ONBOARD CHARGING**
ELEKTRISCHE MITTELSPANNUNGSLADEVORRICHTUNG AN BORD VON SCHIFFEN UND VERFAHREN ZUM LADEN AN BORD
APPAREIL DE CHARGE ÉLECTRIQUE DE NAVIRE EMBARQUÉ À MOYENNE TENSION ET PROCÉDÉ DE CHARGE EMBARQUÉ

(43) Date of publication of application: 12.04.2023
(73) Proprietor: Kongsberg Maritime AS, 3601 Kongsberg (NO)
(72) Inventor: Zahedi, Bijan, 3601 Kongsberg (NO); Hjorteset, Jens, 5177 Bjoroyhamn (NO); Rego, Joao Pedro Meira, 3601 Kongsberg (NO)
(74) Representative: Acapo Onsagers AS

(56) References cited:
- WO-A1-2018/202462
- FR-A1- 3 070 911

## Description

The present invention is related to an onboard medium-voltage vessel electric charging apparatus, according to the preamble of claim 1.

The present invention is also related to a method for onboard medium-voltage charging of at least one energy storage device onboard a marine vessel, according to the preamble of claim 10.

### Background

At present, there is great interest within the marine industry to develop environmentally friendly propulsion systems for marine vessels, where the main goal is to achieve zero emissions or close to zero emissions from the marine vessel. Electric and hybrid electric (electric and fuel) propulsion systems are increasingly being used. Such systems enable the marine vessel to be driven entirely or in part by electrical energy stored in energy storage devices.

Many of modern marine vessels, e.g. ferries, have a DC (direct current) distribution system connected with the energy storage devices.

To utilize the energy from the energy storage device, a DC power consumer must be connected to the energy storage device usually via a marine vessel DC consumer network.

In order to charge the energy storage device, the marine vessel requires a power conversion stage, converting from an AC (alternating current) grid supply to DC voltage.

As dedicated standard for MVAC (medium-voltage alternating current) charging stations for marine vessels do not exist, an onboard charging system is currently preferable to enable marine vessels to connect to the standard MVAC networks meeting the requirements by the existing shore connection standards.

There is further a need within the field to reduce the footprint of required electrical equipment on the marine vessel. It is also a need to remove the requirement for large, heavy and expensive converters, especially at the marine vessel side of the charging system, as well as reducing the costs of implementing them on a marine vessel.

Further, the mentioned converters also result in power losses and there is a desire to reduce the power losses in the charging circuit as much as possible.

One way to achieve this is by making use of series compensation in the power supply to the marine vessel. Examples of such systems may be found in US2020189404 AA/WO2018202462 A1, US6331765 BA, US2013016541 AA and FR3070911A1. The solution of US2013016541A1 uses series connection for DC current decoupling between HVDC (high-voltage direct current) systems and AC grids. In US6331765B1 is disclosed a series compensation technique for reactive power compensation. From US2020189404A1 is known a terrestrial charging station limiting the vessel charging to certain ports with their specific configuration and controllers. In FR3070911A1 is described a battery charger onboard a vehicle comprising a dc-to-dc converter. However, these solutions do not solve all the mentioned needs.

It is accordingly, a need for an onboard medium-voltage vessel electric charging apparatus and method for onboard medium-voltage charging meeting all the mentioned needs.

### Object

The main object of the present invention is to provide an onboard medium-voltage vessel electric charging apparatus and method for onboard medium-voltage charging, partly or entirely solving the mentioned drawbacks of prior art, and/or partly or entirely meeting the mentioned needs.

An object of the present invention is to provide an onboard medium-voltage vessel electric charging apparatus and method for onboard medium-voltage charging reducing the footprint of electrical equipment on a marine vessel.

It is further an object of the present invention to provide an onboard medium-voltage vessel electric charging apparatus and method for onboard medium-voltage charging limiting the volume of electrical equipment required on the marine vessel.

It is an object of the present invention to provide an onboard medium-voltage charging apparatus and method for onboard medium-voltage charging enabling the marine vessel to connect to a standard MVAC grid.

It is an object of the present invention to provide an onboard medium-voltage vessel electric charging apparatus and method for onboard medium-voltage charging enabling the marine vessel to independently regulate the charging power based on the available power from the grid.

An object of the present invention is to provide an onboard medium-voltage vessel electric charging apparatus and method for onboard medium-voltage charging capable of rectification of the AC power supply and delivery of controlled DC current for charging of an onboard energy storage device.

An object of the present invention is to provide an onboard medium-voltage vessel electric charging apparatus and method for onboard medium-voltage charging using as few active components as possible.

It is an object of the present invention to provide an onboard medium-voltage vessel electric charging apparatus and method for onboard medium-voltage charging capable of voltage adjustment over a wide range.

An object of the present invention is to provide an onboard medium-voltage vessel electric charging apparatus and method for onboard medium-voltage charging resulting in minimum converter derating.

It is an object of the present invention to provide an onboard medium-voltage vessel electric charging apparatus and method for onboard medium-voltage charging compensating for voltage variations by adding a series voltage phasor amplitude and phase angle.

It is further an object of the present invention to provide an onboard medium-voltage vessel electric charging apparatus and method for onboard medium-voltage charging providing self-regulated charging current limiting during charging of an onboard energy storage device.

An object of the present invention is to provide an onboard medium-voltage vessel electric charging apparatus and method for onboard medium-voltage charging requiring less investment and installation costs, as well as maintenance costs, compared to prior art solutions.

Further objects will appear from the following description, claims and attached drawings.

### The invention

An onboard medium-voltage vessel electric charging apparatus according to the present invention is defined by the technical features of claim 1. Preferable features of the charging apparatus are described in the dependent claims.

A method for onboard medium-voltage electric charging according to the present invention is defined by the technical features of claim 10. Preferable features of the method are described in the dependent claims.

An onboard medium-voltage vessel electric charging apparatus according to the present invention is configured for connection to an AC (alternating current) power supply at one side and to at least one onboard energy storage device at the other side, either directly or via a vessel DC (direct current) consumer network.

The onboard medium-voltage vessel electric charging apparatus according to the present invention comprises a rectifier unit comprising a rectifier transformer and at least one rectifier bridge arranged in series between the AC power supply and the at least one energy storage device or vessel DC consumer network.

The onboard medium-voltage vessel electric charging apparatus according to the present invention further comprises a controllable compensation unit arranged in series between the rectifier unit, vessel DC consumer network or at least one energy storage device and the AC power supply, in front of the rectifier transformer. The controllable compensation unit according to the present invention is configured to compensate for voltage variations of the vessel DC consumer network or at least one energy storage device by adding a series voltage phasor with controllable amplitude and phase angle to supplied AC voltage to adjust rectifier voltage of the rectifier unit.

The mentioned rectifier unit and controllable compensation unit thus form a charging circuit for charging of the at least one onboard energy storage device.

According to one embodiment of the present invention, the rectifier transformer is a Medium-Voltage to Low-Voltage AC transformer.

In accordance with one embodiment of the present invention, the controllable compensation unit comprises a compensation transformer arranged in series between the AC power supply and rectifier transformer of the rectifier unit. The controllable compensation unit further comprises at least one controllable compensation converter arranged between the at least one rectifier bridge of the rectifier unit, vessel DC consumer network or at least one energy storage device and the compensation transformer.

In accordance with one embodiment of the onboard medium-voltage vessel electric charging apparatus according to the present invention, the controllable compensation converter is a Low-Voltage converter.

According to one embodiment of the onboard medium-voltage vessel electric charging apparatus according to the present invention, the at least one compensation unit is configured to provide the series voltage phasor amplitude as a symmetric or asymmetric range of required DC-voltage to the vessel DC consumer network or at least one energy storage device.

In accordance with one embodiment of the onboard medium-voltage vessel electric charging apparatus according to the present invention, the symmetric range of the series voltage phasor amplitude is between -15 % to 15 %, more preferably between -10 % to 10 % of the required DC-voltage. The example ranges are not to be considered as limiting for the present invention, as these are only examples and other ranges will be within the knowledge of a skilled person.

According to one embodiment of the onboard medium-voltage vessel electric charging apparatus according to the present invention, the asymmetric range of the series voltage phasor amplitude is between -30 % to 0 %, more preferably between -20 % to 0 %, of the required DC-voltage. The example ranges are not to be considered as limiting for the present invention, as these are only examples and other ranges will be within the knowledge of a skilled person.

In accordance with one embodiment of the onboard medium-voltage vessel electric charging apparatus according to the present invention, the onboard medium-voltage vessel electric charging apparatus is configured for scalar or vector control of the series voltage phasor amplitude and phase angle.

According to one embodiment of the onboard medium-voltage vessel electric charging apparatus according to the present invention, the series voltage phasor amplitude and phase angle are continuously controlled.

In accordance with one embodiment of the onboard medium-voltage vessel electric apparatus according to the present invention, the series voltage phasor amplitude and phase angle are continuously controlled over the charging time based on the grid voltage, energy storage device voltage, and charging power set point.

A method according to the present invention for onboard medium-voltage electric charging of at least one onboard energy storage device of a marine vessel from an AC power supply comprises charging the at least one onboard energy storage device directly or via a vessel DC consumer network by a rectifier transformer and rectifier unit arranged in series between the AC power supply and the at least one energy storage device. The method further comprises compensating for voltage variations of the vessel DC consumer network or at least one onboard energy storage device by adding a series voltage phasor with different amplitude and phase angle to supplied AC voltage to adjust rectifier voltage of the rectifier unit.

The method according to one embodiment of the present invention comprises adding the series voltage phasor amplitude as a symmetric or asymmetric range of required DC-voltage to the vessel DC consumer network or at least one onboard energy storage device.

In accordance with one embodiment of the method according to the present invention it comprises using a symmetric range of the series voltage phasor amplitude between -15 % to 15 %, more preferably between -10 % to 10 % of the required DC-voltage. The example ranges are not to be considered as limiting for the present invention, as these are only examples and other ranges will be within the knowledge of a skilled person.

According to one embodiment of the method according to the present invention, the method comprises using an asymmetric range of the series voltage phasor between -30 % to 0 %, more preferably between -20 % to 0 %, of the required DC-voltage. The example ranges are not to be considered as limiting for the present invention, as these are only examples and other ranges will be within the knowledge of a skilled person.

In accordance with a further embodiment of the method according to the present invention, the method comprises controlling the series voltage phasor amplitude and phase angle by scalar control or vector control.

According to one embodiment of the method according to the present invention, the method comprises continuously controlling the series voltage phasor amplitude and phase angle.

According to a further embodiment of the present invention, the method comprises continuously controlling the series voltage phasor amplitude and phase angle over the charging time based on grid voltage, energy storage device voltage, and charging power set point.

By the onboard medium-voltage electric charging apparatus and method for onboard charging according to the present invention is provided a solution wherein one may use mostly passive components and wherein only the compensation converter will have to be active for performing voltage adjustment.

The onboard medium-voltage charging apparatus and method for onboard charging according to present invention provides a solution wherein the marine vessel can connect to a standard MVAC (medium-voltage alternating current) grid and independently regulate its charging power based on the available power from the grid.

The present invention provides a solution where a wide range of energy storage device voltage variations during charging can be compensated for.

By the present invention is provided a solution where large power flows are regulated in the compensation unit where the current is low.

The present invention provides a solution where one may use compact, cheap and efficient diode rectifiers instead of costly active front-end converters.

Accordingly, the present invention is limiting the volume and footprint of electrical equipment required on the marine vessel.

By the present invention is provided an apparatus and method that are capable of rectification of the AC power supply and delivery of controlled DC current for charging of the at least one onboard energy storage device.

The present invention also provides a voltage adjustment over a wider range, compared to prior art solutions.

Accordingly, the present invention deals with power regulation using the series compensation, while DC decoupling is done naturally by the galvanically isolating transformers onboard.

The present invention targets active power control to regulate energy storage device charging power while regulating the reactive power as well to optimize the converter operating point.

By the present invention is provided an electrical configuration and control system onboard the marine vessel that makes the marine vessel independent from specific charging stations. The marine vessel will be able to connect to standard Medium Voltage AC networks regulating its charging power independently.

Further preferable features and advantageous details of the present invention will appear from the following example description, claims and attached drawings.

### Example

The present invention will below be described in further details with references to the attached drawings, where:
Fig. 1 is a principle drawing of an apparatus according to the present invention,
Fig. 2 is an illustration of the control principle of the present invention,
Fig. 3a-b are principle drawings of an embodiment of the apparatus according to the present invention and the corresponding control principle, respectively,
Fig. 4a-b are principle drawings of a further embodiment of the apparatus according to the present invention and corresponding control principle, respectively,
Fig. 5 is a principle drawing of a controlling of the apparatus according to the present invention, and
Fig. 6 is a principle drawing of a vector control mode according to the present invention.

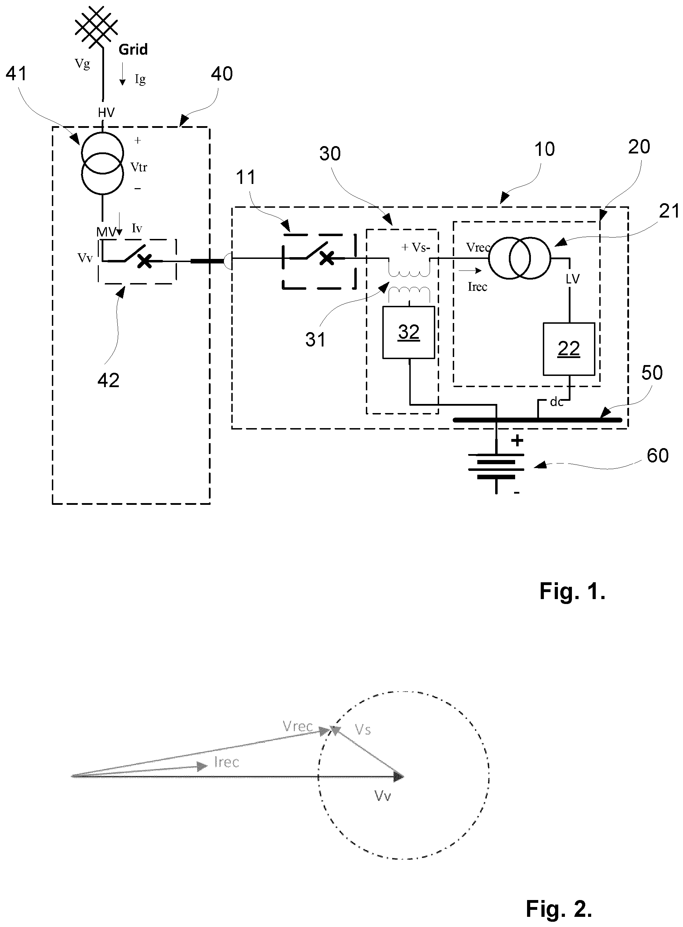

In Fig. 1 is shown a principle drawing of an onboard medium-voltage vessel electric charging apparatus 10 (MVVECA) according to the present invention providing AC (alternating current) voltage adjustment over a wide range.

The onboard MVVECA 10 is adapted to be arranged onboard a marine vessel (not shown) and adapted to be connected to an AC power supply 40 at one side and to at least one onboard energy storage device 60 of the marine vessel at the other side, either directly or via a vessel DC (direct current) consumer network 50, as shown in Fig. 1.

The consumer network 50 in the shown example is a DC-distribution system. The AC power supply 40 is e.g. an AC shore power grid. In the shown example the DC-distribution system 50 is arranged to an energy storage device 60 formed by batteries. Intelligent charging electronics, can of course, be arranged between the DC-distribution system 50 and the energy storage device 60.

The onboard MVVECA 10 according to the present invention comprises a rectifier unit 20 arranged between the AC power supply 40 and the at least one energy storage device 60 or vessel DC-consumer network 50. The rectifier unit 20 comprises a rectifier transformer 21, e.g. a DFE (Diode front end), and at least one rectifier bridge 22 arranged in series between the AC power supply 40 and the at least one energy storage device 60 or vessel DC consumer network 50. The rectifier transformer 21 is according to the present invention a MV (Medium Voltage) to LV (Low Voltage) transformer 21 and connected to the AC power supply 40 at one side. The at least one rectifier bridge 22 is according to the present invention preferably a diode rectifier.

The onboard MVVECA 10 according to the present invention further comprises at least one controllable compensation unit 30 arranged in series between the rectifier unit 20 and the AC power supply 40, i.e. in front of the rectifier transformer 21 of the rectifier unit 20. The controllable compensation unit 30 according to the present invention comprises a compensation transformer 31, arranged in series between the AC power supply 40 and the rectifier transformer 21 of the rectifier unit 20. The controllable compensation unit 30 according to the present invention further comprises a controllable compensation converter 32, e.g. an AFE (active front end), arranged between the compensation transformer 31 and the rectifier bridge 22, vessel DC consumer network 50 or at least one energy storage device 60. According to one embodiment of the present invention, the controllable compensation converter 32 is a LV (Low Voltage) converter.

The mentioned controllable compensation unit 30 and rectifier unit 20 thus forms a controllable charging circuit for the at least one energy storage device 60.

According to a further embodiment of the onboard MVVECA 10 according to the present invention, it preferably comprises a controllable switch 11 for connection and disconnection of the onboard MVVECA 10 to the AC power supply 40.

An AC grid will typically deliver high voltage, and the AC power supply 40 is according to one embodiment of the present invention comprising a HV to MV transformer 41 to transform the high AC voltage to a medium AC voltage suitable for supplying to a marine vessel and thus the onboard MVVECA 10 according to the present invention. Accordingly, the AC power supply 40 supplies a voltage Vᵥ and a current Iᵥ to the marine vessel and thus onboard MVVECA 10 according to the present invention. It will also be advantageous that a controllable switch 42 is arranged at the output of the AC power supply 40.

The cheapest devices to charge energy storage devices 60 from the AC power supply 40 are diode rectifiers. However, as the energy storage device 60 voltage varies in a wide range during the charging cycle, the diode rectifiers need an adjustable AC voltage varying with V_{DC} to regulate the power.

The series compensation according to the present invention provides an excellent possibility for AC voltage adjustment over a wide range.

By arranging at least one compensation unit 30 in series with the MV part of the AC power supply 40, wherein the current is low, this will enable the possibility to regulate large power flows with at least one controllable low voltage compensation converter 32. Accordingly, by the present invention the costly active front-ends on LV side of the rectifier unit 20 can be replaced by their compact, cheap, and efficient counterparts, diode bridges 22.

According to the present invention, the compensation unit 30 is adapted to add a series voltage phasor Vₛ with different amplitudes and phase angles to the supplied medium AC voltage Vᵥ of the AC power supply 40 to adjust the rectifier voltage V_{rec} supplied to the rectifier unit 20.

Reference is now made to Fig. 2 which is a principle drawing of the control principle according to the present invention. The at least one controllable compensation converter 32 according to the present invention is able to apply any voltage vector within the dashed circle shown in the figure. However, any voltage within this dashed circle is not viable in practice, as it could lead to overcurrent or instability.

By the series compensation unit 30 according to the present invention, the voltage of each device could independently vary, while their currents are equal. Accordingly, by the at least one controllable compensation converter 32 regulating its own current, the at least one controllable compensation converter 32 will regulate the currents of other devices/components of the onboard MVVECA 10 and consequently their active and reactive powers (as long as the AC power supply 40 is strong enough to maintain the voltage).

It is common that DC voltage V_{DC} on the DC consumer network 50 or energy storage device 60 varies by around 20 % during charging of the at least one energy storage device 60. To counteract this, the at least one controllable compensation converter 32 according to one embodiment of the present invention is configured to provide a voltage window of around 20 % range of the V_{DC} and configured to adapt the AC voltage V_{rec} supplied to the rectifier unit 20 by adding an adapted series voltage phasor Vₛ to the supplied voltage Vᵥ of the AC power supply 40. As mentioned above, the ranges may vary depending on the application and specifications of the system.

The optimal design/operating conditions of the controllable compensation unit 30 is when the series voltage phasor Vₛ vector is approximately aligned with the rectifier voltage vector V_{rec} supplied to the rectifier unit 20. When these operating conditions are met, the required series voltage phasor Vₛ amplitude is at the lowest, while the compensation unit 30 by the least one controllable compensation converter 32 contributes mainly with active power. Both of these conditions provide minimum converter derating.

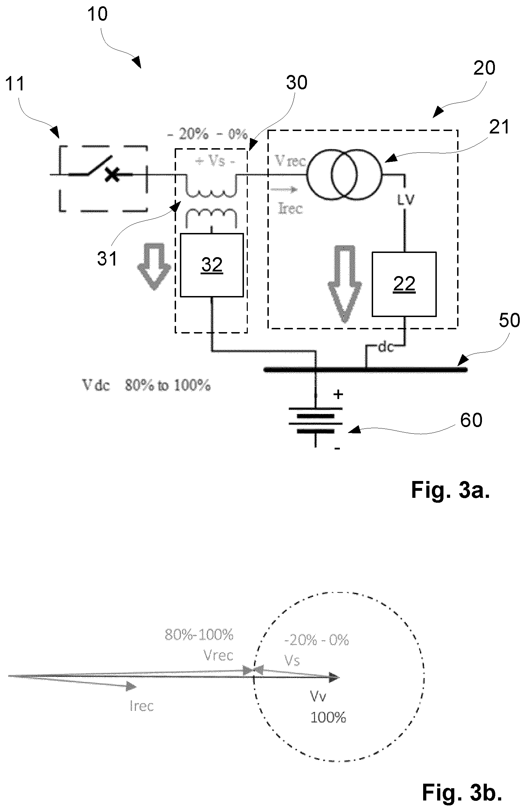

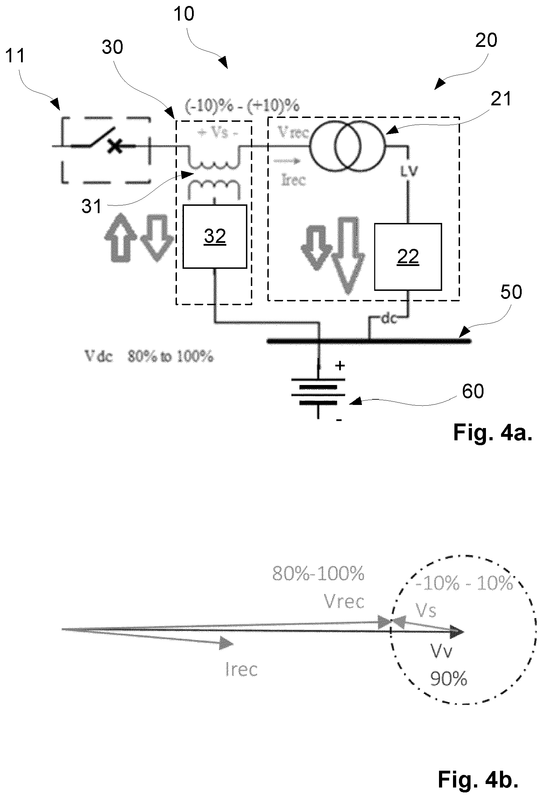

Reference is now made to Fig. 3a-b showing a principle drawing of an embodiment of the present invention wherein the controllable compensation unit 30 is configured to provide a series voltage phasor Vₛ amplitude varying from -20 % to 0 % of the V_{DC}, and Fig. 4a-b showing a principle drawing of an embodiment of the present invention where the controllable compensation unit 30 is configured to provide a series voltage phasor Vₛ amplitude varying from -10 % to 10 % of the V_{DC}.

The main advantage of the embodiment of Fig. 3a-b over the embodiment of Fig. 4a-b is that in the first embodiment one avoids circulating currents. The embodiment of Fig. 3a-b further have some disadvantages in relation to the embodiment of Fig. 4a-b. The compensation transformer 31 primary voltage (and power) and secondary current will be doubled compared with the embodiment of Fig. 4a-b. Accordingly, in the embodiment of Fig. 3a-b, double AFEs (Active Front End) are needed compared to the embodiment of Fig. 4a-b.

One advantage of the embodiment of Fig. 4a-b over the embodiment of Fig. 3a-b is that the number of AFEs required is reduced. An equivalently rated DFE (Diode front end) needs to be added on DFE side instead, which is less costly than the AFE. The solution of the embodiment of Fig. 4a-b further results in lower losses compared to the solution of the embodiment of Fig. 3a-b. A further advantage with the embodiment of Fig. 4a-b is that the compensation transformer 31 will only be required to be half the size of the compensation transformer 31 of the embodiment in Fig. 3a-b. Accordingly, the embodiment of Fig. 4a-b, in addition to the mentioned advantages, requires less space than the embodiment of Fig. 3a-b.

A disadvantage of the solution of Fig. 4a-b in relation to Fig. 3a-b is that one during half of the charging cycle of the energy storage device 60 will have circulating current. A further disadvantage compared to the embodiment of Fig. 3a-b is slightly larger DFE/rectifier transformer 21.

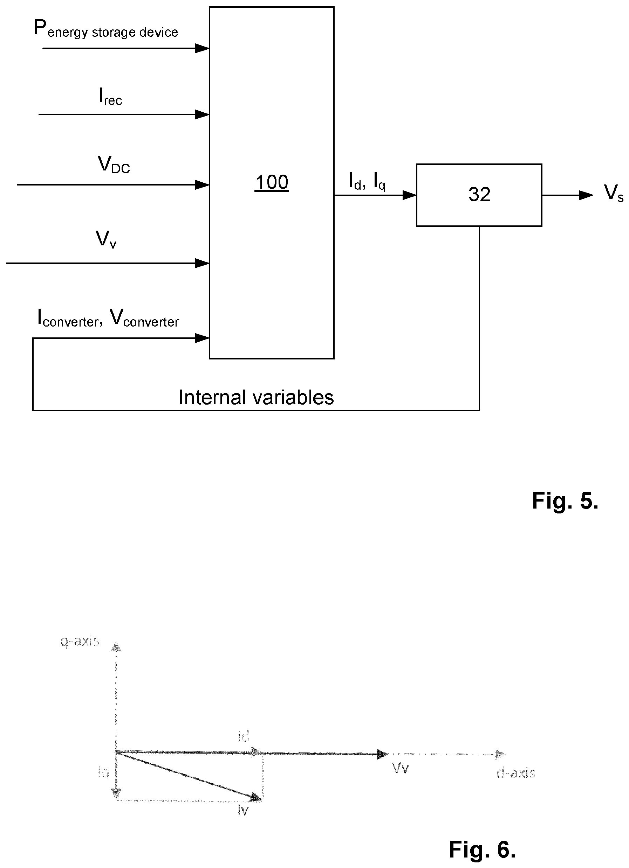

Reference is now made to Fig. 5 showing a block diagram of controlling of the onboard MVVECA 10 according to the present invention. For controlling of the onboard MVVECA 10, the onboard MVVECA 10 comprises a control device 100 provided with means and/or software for controlling the compensation unit 30 by finding/calculating the correct voltage under each condition to maintain all components of the onboard MVVECA 10 within their limits. The onboard MVVECA 10 is further preferably provided with one or more sensors and/or battery management system or other intelligent charging electronics to provide measurements of V_{DC}, Vᵥ, I_{rec} and V_{rec} as input to the control device 100. In addition, the controllable compensation converter 32 is arranged to provide measures of I_{converter} and V_{converter} as input to the control device 100.

The mentioned control device 100 is provided with means and/or software for scalar control or vector control of the compensation unit 30, as described above. In a safe and simple control mode of the control device 100, the control device 100 is adapted to control/setting the current as the control variable of the at least one controllable compensation converter 32 of the compensation unit 30.

According to one embodiment of the present invention, the control device 100 is adapted for scalar control by adjusting series voltage phasor Vₛ amplitude and phase angle to be provided by the controllable compensation unit 30 to regulate active and reactive powers and indirectly regulate the rectifier unit 20 current I_{rec}. The slow dynamics of this control method, particularly when the series voltage phasor Vₛ is close to zero, makes it prone to instability.

According to one embodiment of the present invention, the control device 100 is adapted for vector control, as shown in Fig. 6, by control in d-q coordinate, which results in a much faster dynamics, compared to the scalar control method, while it is straightforward for this configuration. The key of the vector control method is to align the d-axis with the supplied AC voltage Vᵥ from the AC power supply 40. Then, the d-axis current will be the active component of the rectifier unit 20 current I_{rec}. In vector mode the control device 100 will be adapted to use I_{d} as control variable to regulate the charging power (active power) of the controllable compensation unit 30 and I_{q} as control variable to maintain power factor of the inverter bridge of the at least one controllable compensation converter 32 at unity. By the latter one will achieve minimum derating of the at least one controllable compensation converter 32.

Accordingly, current mode control in d-q coordinate is the preferred solution due to its fast dynamics and accuracy.

The control device 100 according to one embodiment is configured to/provided with means and/or software for continuously controlling the series voltage phasor Vₛ amplitude and phase angle. In a further embodiment of the present invention, the control device 100 is configured to/provided with means and/or software for continuously controlling the series voltage phasor Vₛ amplitude and phase angle over the charging time based on grid voltage, energy storage device voltage, and charging power set point.

With the onboard medium-voltage charging method and apparatus according to the present invention, a charging power of up to 10 MW can be regulated by a single 1700 kW rectifier bridge 22 due to the series configuration of the controllable compensation unit 30 according to the present invention.

Short circuit voltage (uk%), secondary and primary voltages, and tapping of different transformers (compensation transformer 31 and rectifier transformer 21) are important parameters in an optimized configuration of the onboard MVVECA 10. An example of a cost-effective configuration is when the vessel voltage Vᵥ is set at 0.9 pu, series voltage Vₛ at 0.1 pu, and transformer 21 and 31 tappings are adjusted to compensate for the voltage drops across uk% of the transformers 21 and 31.

To optimize the cost, it is best to allow small circulating power over the second half of charging time between the rectifier unit 20 and the controllable compensation converter 32. This will reduce the required number of AFEs while reducing the losses as well.

The controllable compensation unit 30 is sensitive to overmodulation and m > 1.15 should be avoided even in transient; otherwise the system will become unstable. Therefore, the passive components of the onboard MVVECA 10 should be designed in such a way that m is strictly maintained below 1.15 in all conditions.

The above described rectifier bridge 22 can be formed by one or more sub-rectifiers arranged in series or parallel configuration.

The above described controllable compensation converter 32 can be formed by one or more sub-AFEs arranged in series or parallel configuration.

Even though the examples make use of an AC power supply 40 grid, the present invention is applicable for marine vessel-to-vessel power transfer.

The features of the above described embodiments can be combined to form other embodiments within the scope of the attached claims.

## Claims

1. An onboard medium-voltage vessel electric charging apparatus (10), wherein the apparatus (10) is connected to an AC power supply (40) at one side and to at least one onboard energy storage device (60) at the other side, wherein the apparatus (10) comprises a rectifier unit (20) comprising a rectifier transformer (21) and at least one rectifier bridge (22) arranged in series between the AC power supply (40) and the at least one energy storage device (60), wherein the apparatus (10) further comprises a controllable compensation unit (30) arranged in series between the rectifier unit (20) or at least one energy storage device (60) and the AC power supply (40), in front of the rectifier transformer (21), **characterized in that**
the controllable compensation unit (30) comprises a compensation transformer (31) arranged in series between the AC power supply (40) and rectifier transformer (21) of the rectifier unit (20) and at least one controllable compensation converter (32) arranged between the at least one rectifier bridge (22) of the rectifier unit (20), vessel DC consumer network (50) or at least one energy storage device (60) and the compensation transformer (31),
the controllable compensation unit (30) is configured to compensate for voltage variations of the at least one energy storage device (60) by adding a series voltage phasor (Vₛ) with controllable amplitude and phase angle to supplied AC voltage (Vᵥ) to adjust rectifier voltage (V_{rec}) of the rectifier unit (20), wherein the series voltage phasor (Vₛ) amplitude is added as a symmetric or asymmetric range of required DC-voltage (V_{DC}) of the vessel DC consumer network (50) or at least one energy storage device (60).

2. An onboard medium-voltage vessel electric charging apparatus (10) according to claim 1, wherein the apparatus (10) is directly connected to the at least one energy storage device (60) or connected to the at least one energy storage device (60) via a vessel DC consumer network (50).

3. An onboard medium-voltage vessel electric charging apparatus (10) according to claim 1, wherein the rectifier transformer (21) is a Medium-Voltage to Low-Voltage AC transformer.

4. An onboard medium-voltage vessel electric charging apparatus (10) according to claim 1, wherein the controllable compensation converter (32) is a Low-Voltage converter.

5. An onboard medium-voltage vessel electric charging apparatus (10) according to claim 1, wherein the symmetric range of the series voltage phasor (Vₛ) amplitude is between -15 % to 15 %, more preferably between -10 % to 10 % of the required DC-voltage (V_{DC}).

6. An onboard medium-voltage vessel electric charging apparatus according to claim 1, wherein the asymmetric range of the series voltage phasor (Vₛ) amplitude is between -30 % to 0 %, more preferably between -20 % to 0 %, of the required DC-voltage (V_{DC}).

7. An onboard medium-voltage vessel electric charging apparatus (10) according to any preceding claim, wherein the at least one compensation converter (32) is configured for scalar control or vector control of the series voltage phasor (Vₛ) amplitude and phase angle.

8. An onboard medium-voltage vessel electric charging apparatus (10) according to claim 7, wherein the at least one compensation unit (32) is configured for continuously controlling the series voltage phasor (Vₛ) amplitude and phase angle.

9. An onboard medium-voltage vessel electric charging apparatus (10) according to claim 7, wherein the at least one compensation unit (32) is configured for continuously controlling the series voltage phasor (Vₛ) amplitude and phase angle over the charging time based on the grid voltage, energy storage device voltage, and charging power set point.

10. A method for onboard medium-voltage electric charging of at least one onboard energy storage device (60) of marine vessel from an AC power supply (40), wherein the method comprises charging the at least one energy storage device (60) directly or via a vessel DC consumer network (50) by a rectifier unit (20) comprising a rectifier transformer (21) and at least one rectifier bridge (22) arranged in series between the AC power supply (40) and the at least one energy storage device (60), **characterized by** compensating for voltage variations of the vessel DC consumer network (50) or at least one energy storage device (60) by adding, by means of a compensation unit (30) comprising a compensation transformer (31) arranged in series between the AC power supply (40) and rectifier transformer (21) of the rectifier unit (20) and at least one controllable compensation converter (32) arranged between the at least one rectifier bridge (22) of the rectifier unit (20), vessel DC consumer network (50) or at least one energy storage device (60) and the compensation transformer (31), a series voltage phasor (Vₛ) with controllable amplitude and phase angle to supplied AC voltage (Vᵥ) to adjust rectifier voltage (V_{rec}) of the rectifier unit (20), wherein the series voltage phasor (Vₛ) amplitude is added as a symmetric or asymmetric range of required DC-voltage (V_{DC}) of the vessel DC consumer network (50) or at least one energy storage device (60).

11. Method for onboard medium-voltage electric charging according to claim 10, wherein using a symmetric range of the series voltage phasor (Vₛ) amplitude between -15 % to 15 %, more preferably between -10 % to 10 % of the required DC-voltage (V_{DC}).

12. Method for onboard medium-voltage electric charging according to claim 10, wherein using an asymmetric range of the series voltage phasor (Vₛ) amplitude between -30 % to 0 %, more preferably between -20 % to 0 % of the required DC-voltage (V_{DC}).

13. Method for onboard medium-voltage electric charging of at least one energy storage device (70) according to claim 11 or 12, wherein controlling the series voltage phasor (Vₛ) amplitude and phase angle by scalar control or vector control.

14. Method for onboard medium-voltage electric charging according to claim 13, wherein continuously controlling the series voltage phasor (Vₛ) amplitude and phase angle.

15. Method for onboard medium-voltage electric charging according to claim 14, wherein continuously controlling the series voltage phasor (Vₛ) amplitude and phase angle over the charging time based on grid voltage, energy storage device voltage, and charging power set point.

## Patentansprüche

1. Eine bordseitige elektrische Mittelspannungsladevorrichtung für Schiffe (10), wobei die Vorrichtung (10) auf einer Seite mit einer Wechselstromversorgung (40) und auf der anderen Seite mit mindestens einer bordseitigen Energiespeichereinrichtung (60) verbunden ist, wobei die Vorrichtung (10) eine Gleichrichtereinheit (20), umfassend einen Gleichrichtertransformator (21) und mindestens einer Gleichrichterbrücke (22), umfasst, die in Reihe zwischen der Wechselstromversorgung (40) und der mindestens einen Energiespeichereinrichtung (60) angeordnet sind, wobei die Vorrichtung (10) ferner eine steuerbare Kompensationseinheit (30) umfasst, die in Reihe zwischen der Gleichrichtereinheit (20) oder der mindestens einen Energiespeichereinrichtung (60) und der Wechselstromversorgung (40) vor dem Gleichrichtertransformator (21) angeordnet ist, **dadurch gekennzeichnet, dass**
die steuerbare Kompensationseinheit (30) einen Kompensationstransformator (31), der in Reihe zwischen der Wechselstromversorgung (40) und dem Gleichrichtertransformator (21) der Gleichrichtereinheit (20) angeordnet ist, und mindestens einen steuerbaren Kompensationswandler (32) umfasst, der zwischen der mindestens einen Gleichrichterbrücke (22) der Gleichrichtereinheit (20), dem Gleichstromverteilungsnetz des Schiffes (50) oder mindestens einer Energiespeichereinrichtung (60) und dem Kompensationstransformator (31) angeordnet ist,
die steuerbare Kompensationseinheit (30) dazu konfiguriert ist, Spannungsänderungen der mindestens einen Energiespeichereinrichtung (60) durch Hinzufügen eines Reihen-Spannungsphasors (Vₛ) mit steuerbarer Amplitude und Phasenwinkel zu der versorgten Wechselspannung (Vᵥ) zu kompensieren, um die Gleichrichterspannung (V_{rec}) der Gleichrichtereinheit (20) einzustellen, wobei die Amplitude des Reihen-Spannungsphasors (Vₛ) als symmetrischer oder asymmetrischer Bereich der erforderlichen Gleichspannung (V_{DC}) des Gleichstromverteilungsnetzes des Schiffes (50) oder mindestens einer Energiespeichereinrichtung (60) hinzugefügt wird.

2. Bordseitige elektrische Mittelspannungsladevorrichtung für Schiffe (10) nach Anspruch 1, wobei die Vorrichtung (10) direkt mit der mindestens einen Energiespeichereinrichtung (60) verbunden ist oder über ein Gleichstromverteilungsnetz des Schiffes (50) mit der mindestens einen Energiespeichereinrichtung (60) verbunden ist.

3. Bordseitige elektrische Mittelspannungsladevorrichtung für Schiffe (10) nach Anspruch 1, wobei der Gleichrichtertransformator (21) ein Mittelspannungs- bis Niederspannungs-Wechselstromtransformator ist.

4. Bordseitige elektrische Mittelspannungsladevorrichtung für Schiffe (10) nach Anspruch 1, wobei der steuerbare Kompensationswandler (32) ein Niederspannungswandler ist.

5. Bordseitige elektrische Mittelspannungsladevorrichtung für Schiffe (10) nach Anspruch 1, wobei der symmetrische Bereich der Amplitude des Reihen-Spannungsphasors (Vₛ) zwischen - 15 % und 15 % liegt.

6. Bordseitige elektrische Mittelspannungsladevorrichtung für Schiffe nach Anspruch 1, wobei der asymmetrische Bereich der Amplitude des Reihen-Spannungsphasors (Vₛ) zwischen -30 % und 0 %, vorzugsweise zwischen -20 % und 0 % der erforderlichen Gleichspannung (V_{DC}) liegt.

7. Bordseitige elektrische Mittelspannungsladevorrichtung für Schiffe (10) nach einem der vorhergehenden Ansprüche, wobei der mindestens eine Kompensationswandler (32) für eine skalare Steuerung oder Vektorsteuerung der Amplitude und des Phasenwinkels des Reihen-Spannungsphasors (Vₛ) konfiguriert ist.

8. Bordseitige elektrische Mittelspannungsladevorrichtung für Schiffe (10) nach Anspruch 7, wobei die mindestens eine Kompensationseinheit (32) zum kontinuierlichen Steuern der Amplitude und des Phasenwinkels des Reihen-Spannungsphasors (Vₛ) konfiguriert ist.

9. Bordseitige elektrische Mittelspannungsladevorrichtung für Schiffe (10) nach Anspruch 7, wobei die mindestens eine Kompensationseinheit (32) zum kontinuierlichen Steuern der Amplitude und des Phasenwinkels des Reihen-Spannungsphasors (Vₛ) über die Ladezeit auf der Grundlage der Netzspannung, der Spannung der Energiespeichereinrichtung und des Ladestrom-Sollwerts konfiguriert ist.

10. Verfahren zum elektrischen Laden mindestens einer bordseitigen Energiespeichereinrichtung (60) eines Seeschiffes aus einer Wechselstromversorgung (40), wobei das Verfahren das Laden der mindestens einen Energiespeichereinrichtung (60) direkt oder über ein Gleichstromverteilungsnetz des Schiffes (50) durch eine Gleichrichtereinheit (20) umfasst, die einen Gleichrichtertransformator (21) und mindestens eine Gleichrichterbrücke (22) umfasst, die in Reihe zwischen der Wechselstromversorgung (40) und der mindestens einen Energiespeichereinrichtung (60) angeordnet sind, **dadurch gekennzeichnet, dass** Spannungsänderungen des Gleichstromverteilungsnetzes des Schiffes (50) oder der mindestens einen Energiespeichereinrichtung (60) durch Hinzufügen eines Reihen-Spannungsphasors (Vₛ) mit steuerbarer Amplitude und Phasenwinkel zu der versorgten Wechselspannung (Vᵥ) zum Einstellen der Gleichrichterspannung (V_{rec}) der Gleichrichtereinheit (20) mittels einer Kompensationseinheit (30) kompensiert werden, die einen Kompensationstransformator (31) umfasst, der in Reihe zwischen der Wechselstromversorgung (40) und dem Gleichrichtertransformator (21) der Gleichrichtereinheit (20) und mindestens einem Kompensationswandler (32) angeordnet ist, der zwischen der mindestens einen Gleichrichterbrücke (22) der Gleichrichtereinheit (20), dem Gleichstromverteilungsnetz des Schiffes (50) oder mindestens einer Energiespeichereinrichtung (60) und dem Kompensationswandler (31) angeordnet ist, wobei die Amplitude des Reihen-Spannungsphasors (Vₛ) als symmetrischer oder asymmetrischer Bereich der erforderlichen Gleichspannung (V_{DC}) des Gleichstromverteilungsnetzes des Schiffes (50) oder mindestens einer Energiespeichereinrichtung (60) hinzugefügt wird.

11. Verfahren zur bordseitigen elektrischen Mittelspannungsaufladung nach Anspruch 10, wobei ein symmetrischer Bereich der Amplitude des Reihen-Spannungsphasors (Vₛ) zwischen -15 % und 15 %, vorzugsweise zwischen -10 % und 10 % der erforderlichen Gleichspannung (V_{DC}) verwendet wird.

12. Verfahren zur bordseitigen elektrischen Mittelspannungsaufladung nach Anspruch 10, wobei ein asymmetrischer Bereich der Amplitude des Reihen-Spannungsphasors (Vₛ) zwischen -30 % und 0 %, vorzugsweise zwischen -20 % und 0 % der erforderlichen Gleichspannung (V_{DC}) verwendet wird.

13. Verfahren zur bordseitigen elektrischen Mittelspannungsaufladung einer Energiespeichereinrichtung (70) nach Anspruch 11 oder 12, wobei die Amplitude und der Phasenwinkel des Reihen-Spannungsphasors (Vₛ) durch skalare Steuerung oder Vektorsteuerung gesteuert werden.

14. Verfahren zur bordseitigen elektrischen Mittelspannungsaufladung nach Anspruch 13, wobei die Amplitude und der Phasenwinkel des Reihen-Spannungsphasors (Vₛ) kontinuierlich gesteuert werden.

15. Verfahren zur bordseitigen elektrischen Mittelspannungsaufladung nach Anspruch 14, wobei die Amplitude und der Phasenwinkel des Reihen-Spannungsphasors (Vₛ) über die Ladezeit auf der Grundlage der Netzspannung, der Spannung der Energiespeichereinrichtung und des Ladestrom-Sollwerts kontinuierlich gesteuert werden.

## Revendications

1. Appareil (10) de charge électrique de navire embarqué à moyenne tension, l'appareil (10) étant connecté à une alimentation en courant alternatif (40) d'un côté et à au moins un dispositif de stockage d'énergie embarqué (60) de l'autre côté, l'appareil (10) comprenant une unité de redressement (20) comprenant un transformateur de redressement (21) et au moins un pont de redressement (22) agencé en série entre l'alimentation en courant alternatif (40) et l'au moins un dispositif de stockage d'énergie (60), l'appareil (10) comprenant en outre une unité de compensation commandable (30) agencée en série entre l'unité de redressement (20) ou au moins un dispositif de stockage d'énergie (60) et l'alimentation en courant alternatif (40), en amont du transformateur de redressement (21), **caractérisé en ce que**
l'unité de compensation commandable (30) comprend un transformateur de compensation (31) agencé en série entre l'alimentation en courant alternatif (40) et le transformateur de redressement (21) de l'unité de redressement (20) et au moins un convertisseur de compensation commandable (32) agencé entre l'au moins un pont de redressement (22) de l'unité de redressement (20), le réseau de consommateurs de courant continu (50) du navire ou au moins un dispositif de stockage d'énergie (60) et le transformateur de compensation (31),
l'unité de compensation commandable (30) est configurée pour compenser les variations de tension de l'au moins un dispositif de stockage d'énergie (60) en ajoutant un phaseur de tension en série (Vₛ) avec une amplitude et un angle de phase commandables à la tension alternative fournie (Vᵥ) pour ajuster la tension de redressement (V_{rec}) de l'unité de redressement (20), l'amplitude du phaseur de tension en série (Vₛ) étant ajoutée en tant que plage symétrique ou asymétrique de tension continue requise (V_{CC}) du réseau de consommateurs de courant continu (50) du navire ou d'au moins un dispositif de stockage d'énergie (60).

2. Appareil (10) de charge électrique de navire embarqué à moyenne tension selon la revendication 1, l'appareil (10) étant directement connecté à l'au moins un dispositif de stockage d'énergie (60) ou connecté à l'au moins un dispositif de stockage d'énergie (60) par l'intermédiaire d'un réseau de consommateurs de courant continu (50) du navire.

3. Appareil (10) de charge électrique de navire embarqué à moyenne tension selon la revendication 1, dans lequel le transformateur de redressement (21) est un transformateur alternatif de moyenne tension à basse tension.

4. Appareil (10) de charge électrique de navire embarqué à moyenne tension selon la revendication 1, dans lequel le convertisseur de compensation commandable (32) est un convertisseur basse tension.

5. Appareil (10) de charge électrique de navire embarqué à moyenne tension selon la revendication 1, dans lequel la plage symétrique de l'amplitude du phaseur de tension en série (Vₛ) est comprise entre -15 % et 15 %, plus préférentiellement entre -10 % et 10 % de la tension continue requise (V_{CC}).

6. Appareil de charge électrique de navire embarqué à moyenne tension selon la revendication 1, dans lequel la plage asymétrique de l'amplitude du phaseur de tension en série (Vₛ) est comprise entre -30 % et 0 %, plus préférentiellement entre -20 % et 0 %, de la tension continue (V_{CC}) requise.

7. Appareil (10) de charge électrique de navire embarqué à moyenne tension selon l'une quelconque des revendications précédentes, dans lequel l'au moins un convertisseur de compensation (32) est configuré pour une commande scalaire ou une commande vectorielle de l'amplitude et de l'angle de phase du phaseur de tension en série (Vₛ).

8. Appareil (10) de charge électrique de navire embarqué à moyenne tension selon la revendication 7, dans lequel l'au moins une unité de compensation (32) est configurée pour commander en continu l'amplitude et l'angle de phase du phaseur de tension en série (Vₛ).

9. Appareil (10) de charge électrique de navire embarqué à moyenne tension selon la revendication 7, dans lequel l'au moins une unité de compensation (32) est configurée pour commander en continu l'amplitude et l'angle de phase du phaseur de tension en série (Vₛ) pendant le temps de charge sur la base de la tension du réseau, de la tension du dispositif de stockage d'énergie et du point de consigne de la puissance de charge.

10. Procédé de charge électrique à moyenne tension embarqué d'au moins un dispositif de stockage d'énergie embarqué (60) de navire marin à partir d'une alimentation en courant alternatif (40), le procédé comprenant la charge de l'au moins un dispositif de stockage d'énergie (60) directement ou par l'intermédiaire d'un réseau de consommateurs de courant continu (50) du navire par une unité de redressement (20) comprenant un transformateur de redressement (21) et au moins un pont de redressement (22) agencé en série entre l'alimentation en courant alternatif (40) et l'au moins un dispositif de stockage d'énergie (60), **caractérisé par la** compensation des variations de tension du réseau de consommateurs de courant continu (50) du navire ou de l'au moins un dispositif de stockage d'énergie (60) par l'ajout, au moyen d'une unité de compensation (30) comprenant un transformateur de compensation (31) agencé en série entre l'alimentation en courant alternatif (40) et le transformateur de redressement (21) de l'unité de redressement (20) et au moins un convertisseur de compensation commandable (32) agencé entre l'au moins un pont de redressement (22) de l'unité de redressement (20), le réseau de consommateurs de courant continu (50) du navire ou au moins un dispositif de stockage d'énergie (60) et le transformateur de compensation (31), d'un phaseur de tension en série (Vₛ) avec une amplitude et un angle de phase commandables par rapport à la tension alternative fournie (Vᵥ) pour ajuster la tension de redressement (V_{rec}) de l'unité de redressement (20), l'amplitude du phaseur de tension en série (Vₛ) étant ajoutée en tant que plage symétrique ou asymétrique de tension continue requise (V_{CC}) du réseau de consommateurs de courant continu (50) du navire ou d'au moins un dispositif de stockage d'énergie (60).

11. Procédé de charge électrique à moyenne tension embarqué selon la revendication 10, dans lequel une plage symétrique de l'amplitude du phaseur de tension en série (Vₛ) comprise entre -15 % et 15 %, plus préférentiellement entre -10 % et 10 % de la tension continue (V_{CC}) requise est utilisée.

12. Procédé de charge électrique à moyenne tension embarqué selon la revendication 10, dans lequel une plage asymétrique de l'amplitude du phaseur de tension en série (Vₛ) comprise entre -30 % et 0 %, plus préférentiellement entre -20 % et 0 % de la tension continue (V_{CC}) requise est utilisée.

13. Procédé de charge électrique à moyenne tension embarqué d'au moins un dispositif de stockage d'énergie (70) selon la revendication 11 ou 12, dans lequel l'amplitude et l'angle de phase du phaseur de tension en série (Vₛ) sont commandés par commande scalaire ou par commande vectorielle.

14. Procédé de charge électrique à moyenne tension embarqué selon la revendication 13, dans lequel l'amplitude et l'angle de phase du phaseur de tension en série (Vₛ) sont commandés en continu.

15. Procédé de charge électrique à moyenne tension embarqué selon la revendication 14, dans lequel l'amplitude et l'angle de phase du phaseur de tension en série (Vₛ) sont commandés en continu pendant le temps de charge sur la base de la tension du réseau, de la tension du dispositif de stockage d'énergie et du point de consigne de la puissance de charge.
